Europäisches Patentamt

**European Patent Office**

**Office européen des brevets**

(19)

(11) Numéro de publication: **0 019 526**
**B1**

(12) **FASCICULE DE BREVET EUROPEEN**

(45) Date de publication du fascicule du brevet: **08.08.84**

(51) Int. Cl.³: **F 16 F 15/12, F 16 D 13/68**

(21) Numéro de dépôt: **80400630.2**

(22) Date de dépôt: **09.05.80**

(54) **Dispositif amortisseur de torsion, en particulier friction d'embrayage, notamment pour véhicule automobile.**

(30) Priorité: **11.05.79 FR 7911968**

(43) Date de publication de la demande:
**26.11.80 Bulletin 80/24**

(45) Mention de la délivrance du brevet:
**08.08.84 Bulletin 84/32**

(84) Etats contractants désignés:
**DE FR GB IT**

(56) Documents cités:
**US - A - 3 811 545**

(73) Titulaire: **VALEO**
**64 Avenue de la Grande Armée**
**F-75017 Paris (FR)**

(72) Inventeur: **Loizeau, Pierre**
**1 Allée de l'Albain**
**F-92140 Ville d'Avray (FR)**

(74) Mandataire: **CABINET BONNET-THIRION**
**95 Boulevard Beaumarchais**
**F-75003 Paris (FR)**

Courier Press, Leamington Spa, England.

## Description

La présente invention concerne d'une manière générale les dispositifs amortisseurs de torsion qui comportent au moins deux parties coaxiales montées rotatives l'une par rapport à l'autre, dans les limites d'un débattement angulaire déterminé, et à l'encontre d'organes élastiques aptes à agir circonférentiellement entre elles, dits ci-après organes élastiques à action circonférentielle, pour une plage au moins dudit débattement angulaire.

En pratique, chacune des parties en question comporte une pièce annulaire, parallèlement l'une à l'autre, et les organes élastiques prévus entre elles sont chacun individuellement logés pour partie dans une fenêtre de la pièce annulaire de l'une desdites parties, et pour partie dans une fenêtre de la pièce annulaire de l'autre de celles-ci.

Ainsi qu'on le sait, un tel dispositif amortisseur de torsion entre usuellement dans la constitution d'une friction d'embrayage, notamment pour véhicule automobile, l'une de ses parties rotatives portant alors un disque de friction, destiné à être solidarisé en rotation avec un premier arbre, en pratique un arbre menant, l'arbre de sortie d'un moteur, tandis qu'une autre desdites parties rotatives est portée par un moyeu destiné à être solidarisé en rotation avec un deuxième arbre, en pratique un arbre mené, l'arbre d'entrée d'une boîte de vitesses.

Un tel dispositif permet en effet d'assurer une transmission régulée du couple de rotation appliqué à l'une de ses parties rotatives lorsque l'autre est elle-même l'objet d'un couple de rotation, c'est-à-dire de filtrer les vibrations susceptibles de prendre naissance tout au long de la chaîne cinématique, allant du moteur aux arbres de roue commandés, sur laquelle il est inséré.

Ainsi qu'on le sait également, il est avantageux, au moins pour certaines applications, et notamment pour celle relative aux frictions d'embrayage pour véhicules automobiles, que, pour les faibles valeurs du débattement angulaire entre les deux parties rotatives constitutives d'un tel dispositif amortisseur de torsion, le couple transmis entre celles-ci reste faible.

En effet, cette disposition, qui implique la mise en oeuvre d'organes élastiques à action circonférentielle de faible raideur pour les faibles valeurs de couple, permet notamment d'éliminer les bruits de boîte de vitesses au point mort, à l'arrêt du véhicule concerné, dits ci-après bruits de point mort, notamment à chaud.

Et il apparaît que, au moins dans une certaine mesure, il est souhaitable, de ce seul point de vue, que la plage de débattement angulaire au cours de laquelle interviennent ainsi ces organes élastiques de faible raideur soit aussi étendue que possible.

En pratique, pour que les organes élastiques de faible raideur soient effectivement les seuls à intervenir pour les faibles valeurs de couple, les fenêtres des pièces annulaires des deux parties coaxiales constitutives du dispositif amortisseur de torsion concerné ont un même développement circonférentiel d'une de ces parties à l'autre, tandis que, pour les autres organes élastiques interposés entre celles-ci, qui ont une raideur plus forte, les fenêtres de la pièce annulaire de la partie menante dans lesquelles sont logés ces organes élastiques ont un développement circonférentiel différent de celui des fenêtres correspondantes de la pièce annulaire de la partie menée.

Ainsi, dès que, une vitesse étant enclenchée, une action est exercée sur l'accélérateur du véhicule concerné, en vue d'un fonctionnement "en tirage" de l'ensemble, les organes élastiques de forte raideur n'interviennent qu'après que le jeu circonférentiel entre les bords correspondants des fenêtres dans lesquelles ils sont logés, de la partie menante à la partie menée, ait été rattrapé.

De même, lorsque, l'action sur l'accélérateur étant suspendue, le couple entre les deux parties rotatives constitutives du dispositif amortisseur de torsion concerné change de sens, le fonctionnement de l'ensemble devenant alors du type dit "en rétro", les organes élastiques de forte raideur, préalablement comprimés entre partie menante et partie menée, se détendent, jusqu'à ce que, retrouvant un appui à chacune de leurs extrémités sur les bords des fenêtres de la partie menée dans lesquelles ils sont logés pour la configuration de repos de l'ensemble, qui sont celles de plus petit développement circonférentiel, ils laissent à nouveau seuls à intervenir les organes élastiques de faible raideur, puis se recompriment, et vice versa, lorsque de nouveau une action est exercée sur l'accélérateur.

En pratique, lorsque l'action sur l'accélérateur est suspendue, le changement de sens du couple est quasi instantané.

Or, que ce soit dans un sens ou dans l'autre, les organes élastiques de faible raideur, qui interviennent à chaque fois pour les faibles valeurs de couple, sont très rapidement saturés.

Il en résulte donc, lorsque l'action sur l'accélérateur est suspendue ou est à nouveau exercée, un basculement instantané et bruyant de l'une des deux parties constitutives du disque amortisseur de torsion concerné par rapport à l'autre, ce basculement correspondant au rattrapage de jeu à faire entre lesdites parties dû à une saturation, d'abord dans un sens, puis dans l'autre, des organes élastiques de faible raideur intervenant entre elles.

Le bruit dont s'accompagne ce basculement est, en pratique, d'autant plus intense que, d'une part, la plage de débattement angulaire entre les deux parties rotatives en question correspondant aux organes élastiques de faible raideur est importante, et que, d'autre part, le rapport de vitesse engagé est court.

Ainsi, deux exigences contradictoires sont à concilier, l'une relative à la mise en oevure d'une plage de débattement angulaire dans laquelle n'interviennent, aux valeurs de couple faibles, que des organes élastiques à action circonférentielle de faible raideur, pour une bonne absorption des bruits de point mort, notamment pour les véhicules à moteur diesel, dont le régime de ralenti est particulièrement bas et les accélérations cycliques particulièrement importantes, l'autre relative au rattrapage de jeu angulaire usuellement lié à une telle plage lors du passage d'un fonctionnement "en tirage", accélérateur enfoncé, à un fonctionnement "en rétro", accélérateur relâché, et vice versa, un tel rattrapage de jeu angulaire étant lui aussi générateur de bruit, et celui-ci étant d'autant plus important que ladite plage est elle-même plus étendue.

Pour surmonter cette difficulté, il a été proposé, dans la demande de brevet français déposée le 23.2.1979 sous le No. 79 04719, à laquelle correspondent les demandes de brevet européens No. EP—A.15203 et EP—A.15204, de mettre en oeuvre un organe de verrouillage sensible à la force centrifuge, à l'encontre de moyens de rappel, et monté ainsi mobile de manière réversible entre une position rétractée d'attente, pour laquelle il est sans effet, et laisse donc une libre capacité d'action aux moyens élastiques à action circonférentielle interposée entre les deux parties concernées, et une position déployée de service pour laquelle, au-delà d'une vitesse de rotation déterminée liée à ces moyens de rappel, il assure un appui circonférentiel positif d'une desdites parties sur l'autre, pour l'un au moins des sens de rotation, et met donc hors service lesdits moyens élastiques à action circonférentielle, ou, d'une manière plus générale, modifie les caractéristiques de fonctionnement de l'ensemble.

Bien que cette disposition ait donné et donne satisfaction, elle peut, pour certains véhicules, se trouver en défaut ou être difficile à mettre en oeuvre, lorsque la vitesse de rotation du moteur est faible.

C'est le cas notamment pour les véhicules équipés d'un moteur diesel qui, développant un couple moteur constant, autorise le maintien engagé d'une vitesse même pour les faibles vitesses de rotation.

Par exemple, il est possible de maintenir engagée une vitesse jusqu'à environ 1000 tours/mn, alors que le ralenti du moteur est de l'ordre de 750 tours/mn.

Par conséquent, si, à une vitesse de rotation aussi faible du moteur, le conducteur lève le pied, il ne subsiste plus qu'un écart de 250 tours/mn pour permettre l'intervention de l'organe de verrouillage sensible à la force centrifuge, et cet écart peut être insuffisant pour que cette intervention se développe correctement.

La présent invention a d'une manière générale pour objet une disposition donnant satisfaction en toute sécurité, même dans le cas de faibles vitesses de rotation.

De manière plus précise elle a tout d'abord pour objet un dispositif amortisseur de torsion, en particulier friction d'embrayage, notamment pour véhicule automobile, du genre comportant au moins deux parties coaxiales montées rotatives l'une par rapport à l'autre, dans les limites d'un débattement angulaire déterminé, et à l'encontre d'organes élastiques aptes à agir circonférentiellement entre elles pour une plage au moins dudit débattement angulaire, dits organes élastiques à action circonférentielle, ce dispositif amortisseur de torsion étant caractérisé en ce qu'il comporte au moins un organe, dit ci-après organe d'interposition, qui est sensible au débattement angulaire entre lesdites parties, à l'encontre de moyens de rappel, et qui est ainsi mobile de manière réversible entre une position d'attente, pour laquelle il est sans effet, et, au-delà d'une valeur déterminée dudit débattement, une position de service pour laquelle, prenant circonférentiellement appui, directement ou indirectement, sur l'une quelconque desdites parties, il est apte à fournir un appui circonférentiel à l'un au moins desdits organes élastiques, en sorte que les caractéristiques de fonctionnement du dispositif s'en trouvent modifiées.

Suivant une première forme de réalisation possible de l'invention, l'organe d'interposition suivant l'invention est porté par l'une des parties coaxiales rotatives constitutives du dispositif amortisseur de torsion concerné, et il est apte à fournir par lui-même, en position de service, un appui circonférentiel à l'un au moins des organes élastiques interposés entre lesdites parties.

En variante, suivant une autre forme de réalisation possible de l'invention, il est associé à l'organe d'interposition suivant l'invention, d'une part un organe d'appui, qui s'étend axialement, et avec lequel, en position de service, il est apte à venir en appui circonférentiel positif, et d'autre part une plaque annulaire, qui est engagée par des évidements, tels que fenêtres ou échancrures, sur les organes élastiques prévus entre les parties coaxiales rotatives constitutives du dispositif amortisseur de torsion concerné, sans jeu circonférentiel pour celui au moins des dits organes élastiques qui est concerné, c'est-à-dire celui avec lequel doit coopérer l'organe d'interposition, et avec un jeu circonférentiel pour les autres organes élastiques, et qui forme une pièce portant l'une quelconque desdits organes d'interposition et d'appui tandis que l'autre est solidaire d'une pièce appartenant à l'une quelconque desdites parties, en sorte que, dans ce cas, c'est par l'intermédiaire de ladite plaque annulaire que l'organe d'interposition est apte à fournir un appui circonférentiel au moins audit organe élastique concerné.

Quoi qu'il en soit, au point mort, véhicule à l'arrêt, le débattement angulaire entre les deux parties rotatives constitutives du dispositif amortisseur de torsion concerné reste réduit, et l'organe d'interposition qu'il comporte suivant l'invention est alors sans action: les organes élastiques à action circonférentielle de faible raideur et de forte raideur prévus entre lesdites parties interviennent alors tous librement entre celles-ci, pour toute la plage de débattement angulaire qui leur est allouée, quelle que soit l'étendue de cette plage.

Par contre, lorsque, véhicule en déplacement, le débattement angulaire entre les deux parties rotatives constitutives du dispositif amortisseur de torsion devient suffisant l'organe d'interposition suivant l'invention passe de sa position d'attente précédente, dite ici par commodité position rétractée d'attente, à sa position de service, dite ici par commodité position déployée de service.

Ainsi, bien que l'organe de verrouillage suivant l'invention soit inévitablement sensible à la force centrifuge, en tant que constituant d'un ensemble rotatif, c'est essentiellement en fonction du débattement angulaire entre les deux parties coaxiales constitutives du dispositif amortisseur de torsion considéré, et donc, en pratique, du couple transmis d'une de ces parties à l'autre, que se trouve commandé, de manière positive, pour une valeur déterminée dudit débattement, le passage de cet organe de verrouillage de sa position rétractée d'attente à sa position déployée de service.

Autrement dit, un tel passage intervient de manière sûre quelle que soit la vitesse de rotation du dispositif.

Pour la position déployée de service de l'organe d'interposition suivant l'invention, un appui circonférentiel est rendu disponible pour un des organes élastiques, qui est en pratique un organe élastique de forte raideur, en sorte que le déploiement de détente de celui-ci est interrompu.

Tout se passe dès lors comme si la géométrie spécifique du dispositif amortisseur de torsion concerné, liée au jeu circonférentiel, de partie menante à partie menée, entre les fenêtres dans lesquelles sont logés les organes élastiques, se trouvait, pour l'un au moins de ceux-ci, modifiée.

Autrement dit, tout se passe comme si, pour l'organe élastique concerné, le développement circonférentiel de la fenêtre de la pièce annulaire de l'une des deux parties coaxiales rotatives dans laquelle il est pour partie logé était susceptible de prendre l'une quelconque de deux valeurs, l'une lorsque l'organe d'interposition suivant l'invention est en position rétractée d'attente, l'autre lorsque l'organe d'interposition est en position déployée de service.

A cet égard, la présente invention a encore pour objet un dispositif amortisseur de torsion, en particulier friction d'embrayage, du genre comportant au moins deux parties coaxiales montées rotatives l'une par rapport à l'autre, dans les limites d'un débattement angulaire déterminé, et à l'encontre d'organes élastiques aptes à agir circonférentiellement entre elles pour une plage au moins dudit débattement angulaire, chacune desdites parties comportant une pièce annulaire, parallèlement l'une à l'autre, et lesdits organes élastiques étant chacun individuellement logés pour partie dans une fenêtre de la pièce annulaire de l'une desdites parties et pour partie dans une fenêtre de la pièce annulaire de l'autre desdites parties, caractérisé en ce qu'il comporte au moins un organe, dit ci-après par commodité organe d'interposition, qui est sensible au débattement angulaire entre lesdites parties, à l'encontre de moyens de rappel, et qui est ainsi mobile de manière réversible entre une position d'attente, pour laquelle il est sans effet, et, au-delà d'une valeur déterminée dudit débattement, une position de service pour laquelle, pour l'un au moins desdits organes élastiques, il se substitue, soit directement, soit indirectement, à l'un des bords radiaux d'une des fenêtres dans lesquelles est logé ledit organe élastique.

Il est clair, de ce qui précède, que, suivant la position de l'organe d'interposition suivant l'invention, les caractéristiques de fonctionnement du dispositif amortisseur de torsion concerné sont différentes.

En effet, lorsque l'organe d'interposition suivant l'invention est en position déployée de service, l'action des organes élastiques est modifiée, et, en particulier, les organes élastiques de faible raideur sont empêchés d'intervenir seuls aux faibles valeurs de couple.

Ainsi tout bruit est évité lors d'un passage d'un fonctionnement "en tirage" à un fonctionnement "en rétro", et ceci quelle que soit l'étendue de la plage de débattement angulaire dans laquelle interviennent les organes élastiques de faible raideur pour la position de point mort à l'arrêt.

Par suite, cette plage peut être faite aussi étendue q'uil est nécessaire pour une bonne absorption des bruits de point mort.

Les caractéristiques et avantages de l'invention ressortiront d'ailleurs de la description qui va suivre, à titre d'exemple, en référence aux dessins schématiques annexés sur lesquels:

la figure 1 est une vue partielle en élévation, avec un arrachement local, d'un dispositif amortisseur de torsion suivant l'invention, pour la position rétractée d'attente de l'organe d'interposition qu'il comporte;

la figure 2 en est une vue en coupe axiale, suivant la ligne brisée II—II de la figure 1;

la figure 3 en est une autre demi-vue en coupe axiale, suivant la ligne brisée III—III de la figure 1;

la figure 4 est, à échelle supérieure, une vue en perspective d'un des éléments mis en oeuvre dans le dispositif amortisseur de torsion, représenté isolément;

la figure 5 reprend pour partie la figure 1, pour la position déployée de service de l'organe d'interposition;

les figures 6 et 7 sont des diagrammes illustrant le mode de fonctionnement du dispositif amortisseur de torsion suivant l'invention;

la figure 8 est une vue en coupe axiale, suivant la ligne brisée VIII—VIII de la figure 10, d'un autre dispositif amortisseur de torsion suivant l'invention;

la figure 9 en est une vue partielle en élévation, suivant la flèche IX de la figure 8;

la figure 10 en est une vue partielle en coupe transversale, suivant la ligne brisée X—X de la figure 8;

la figure 11 en est une vue partielle en coupe transversale, suivant la ligne XI—XI de la figure 9;

la figure 12 est une vue en coupe axiale d'un ressort de torsion que comporte ce dispositif amortisseur de torsion;

la figure 13 est une demi-vue en coupe axiale, suivant la ligne XIII—XIII de la figure 14, d'un autre dispositif amortisseur de torsion suivant l'invention;

la figure 14 en est une vue partielle en élévation, suivant la flèche XIV de la figure 13;

la figure 15 est une demi-vue en coupe axiale d'un autre dispositif amortisseur de torsion, suivant l'invention, suivant la ligne brisée XV—XV de la figure 16;

la figure 16 en est une vue partielle en coupe transversale, suivant la ligne brisée XVI—XVI de la figure 15, pour la position rétractée d'attente du ou des organes d'interposition mis en oeuvre suivant l'invention;

la figure 17 est une vue en perspective isolée d'un des organes de verrouillages qu'il comporte;

la figure 18 est une demi-vue analogue à celle de la figure 16, pour la position déployée de service du ou des organes d'interposition.

Ces figures illustrent d'une manière générale, à titre d'exemple, l'application de l'invention à la constitution d'une friction d'embrayage à moyeu amortisseur.

Ainsi qu'on le sait, une telle friction d'embrayage comporte globalement un moyeu 10, un voile de moyeu 11 formant radialement une pièce annulaire entourant le moyeu 10, deux rondelles de guidage annulaires 12 qui s'étendent parallèlement au voile de moyeu 11, de part et d'autre de celui-ci, autour du moyeu 10, et qui sont reliées l'une à l'autre par des colonnettes axiales 13 traversant le voile de moyeu 11 à la faveur d'échancrures 14 prévues à cet effet à la périphérie de celui-ci, et un disque de friction 15, qui porte à sa périphérie, et de part et d'autre de celle-ci, des garnitures de frottement 16.

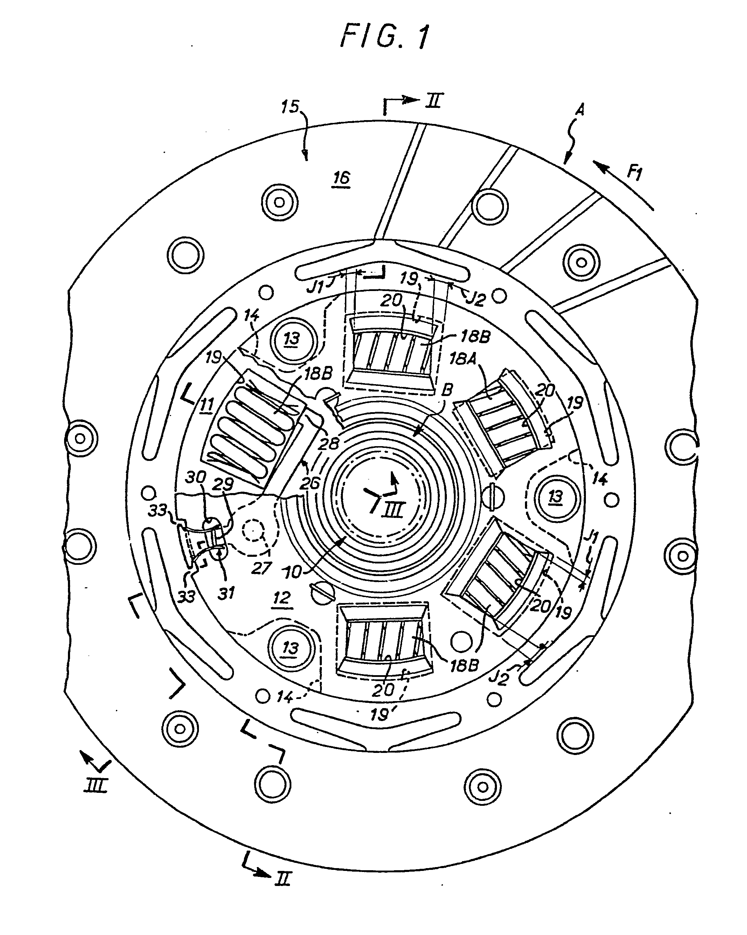

Dans l'exemple de réalisation représenté sur les figures 1 à 5, le disque de friction 15 est solidaire des rondelles de guidage 12, en étant rapporté sur l'une de celles-ci par les mêmes colonnettes 13 qui solidarisent l'une à l'autre ces rondelles de guidage 12, les rondelles de guidage 12 sont librement rotatives autour du moyeu 10 dans les limites d'un débattement angulaire déterminé, tel qu'il apparaîtra ci-après, et le voile de moyeu 11 est solidaire du moyeu 10.

Une telle friction d'embrayage comporte ainsi deux parties coaxiales montées rotatives l'une par rapport à l'autre dans les limites du débattement angulaire déterminé mentionné ci-dessus, à savoir une partie A formée par le disque de friction 15 et les rondelles de guidage 12, et dite ici par commodité, partie excitante, cette partie A étant en général destinée à être solidarisée en rotation avec un arbre menant, l'arbre de sortie du moteur dans le cas d'un véhicule automobile, et une partie B formée par le voile de moyeu 11 et le moyeu 10, et dite ici, par commodité, partie excitée, cette partie B étant en général destinée à être solidarisée en rotation avec un arbre mené, l'arbre d'entrée d'une boîte de vitesses par exemple dans le cas d'un véhicule automobile.

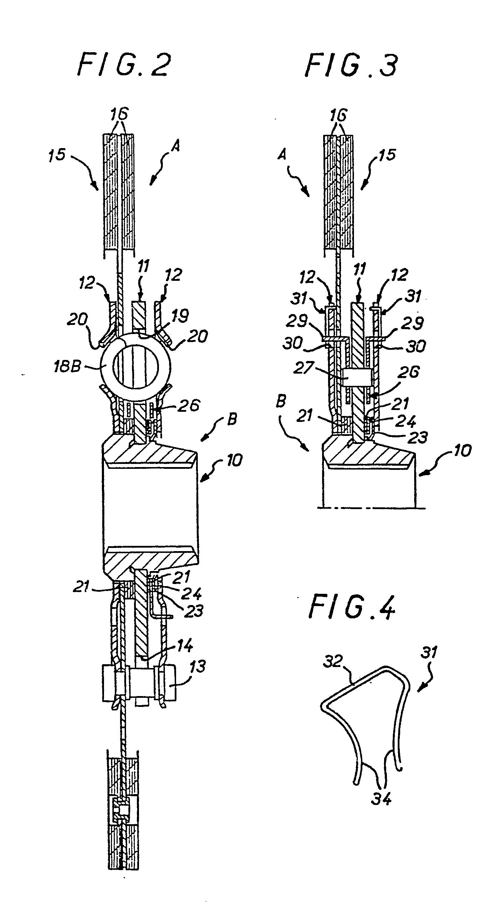

Parallèlement l'une à l'autre, ces parties A, B comportent au moins une pièce annulaire, à savoir le voile de moyeu 11, pour la partie A, et l'une ou l'autre des rondelles de guidage 12 pour la partie B, figure 2.

Le débattement angulaire entre les parties A, B ainsi constituées se fait à l'encontre d'organes élastiques 18A, 18B, qui sont chacun aptes à agir circonférentiellement entre elles pour une plage au moins dudit débattement angulaire, et qui sont chacun individuellement logés pour partie dans une fenêtre 19 du voile de moyeu 11 et pour partie dans des fenêtres 20 des rondelles de guidage 12.

Il s'agit, dans l'exemple de réalisation représenté, de ressorts hélicoïdaux globalement allongés tangentiellement par rapport à une circonférence de l'ensemble.

Pour le ressort 18A, qui est un ressort de relativement faible raideur, et qui est unique dans l'exemple de réalisation représenté, le développement circonférentiel de la fenêtre 19 du voile de moyeu 11 dans lequel il est logé est égal à celui des fenêtres 20 des rondelles de guidage 12 dans lesquelles il est également logé.

Par contre, pour les ressorts 18B, qui sont des ressorts de relativement forte raideur, et qui sont au nombre de quatre dans l'exemple de réalisation représenté, en étant disposés par groupe de deux de part et d'autre du ressort 18A le développement circonférentiel des fenêtres 19 du voile de moyeu 11 est supérieur à celui des fenêtres 20 des rondelles de guidage 12, en sorte que, entre les bords radiaux correspondants de ces fenêtres, il existe un jeu circonférentiel J1 pour le sens de rotation de la friction qui, tel que repéré par une flèche F1 à la figure 1, correspond à un fonctionnement "en tirage" de celle-ci, et un jeu circonférentiel J2 pour le sens de rotation inverse, qui correspond à un fonctionnement "en rétro" de cette friction.

Par exemple, et tel que représenté, le jeu circonférentiel J1, mesuré angulairement, peut être inférieur au jeu circonférentiel J2.

Dans l'exemple de réalisation représenté, les jeux J1, J2 sont identiques pour tous les ressorts de forte raideur 18B, mais il va de soi qu'il peut en être autrement.

Dans l'exemple de réalisation représenté, la friction d'embrayage concernée comporte deux rondelles de frottement 21, qui sont disposées chacune respectivement de part et d'autre du voile de moyeu 11, au contact de celui-ci, et une rondelle ondulée 23, à élasticité axiale, qui, prenant appui sur une rondelle de guidage 12, agit sur la rondelle de frottement 21 correspondante par l'intermédiaire d'une rondelle de répartition 24 calée en rotation sur cette rondelle de guidage 12.

Une telle friction d'embrayage est bien connue par elle-même; elle ne sera pas décrite plus en détail ici.

Son fonctionnement est également bien connu.

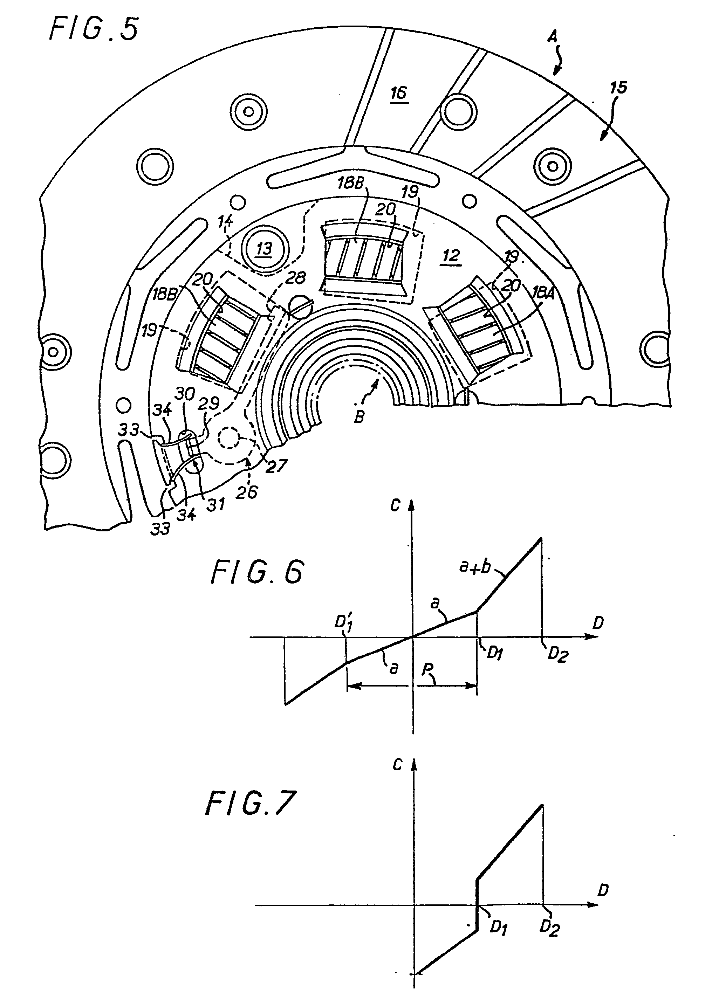

Il est illustré par le diagramme de la figure 6, sur lequel est rapporté en abscisses le débattement angulaire D entre les parties A, B, et, en ordonnées, le couple C transmis d'une de ces parties à l'autre.

Lorsqu'un couple menant est appliqué à la partie excitante A dans le sens de la flèche F1 de la figure 1, il est progressivement transmis à la partie excitée B par les ressorts 18A, 18B.

Dans un premier temps, pour les valeurs de couple faibles, et c'est le cas au point mort, véhicule à l'arrêt, seul intervient le ressort de faible raideur 18A, pour élimination des bruits de point mort correspondants, les ressorts de forte raideur 18B se trouvant à distance de la tranche correspondante des fenêtres 19 du voile de moyeu 11 dans lesquelles ils sont logés, en raison du jeu circonférentiel J1 précisé ci-dessus (droite a du diagramme).

Dans un deuxième temps, dès que, pour un fonctionnement "en tirage", le coupe augmente, le ressort de faible raideur 18A se trouve saturé, et le jeu circonférentiel J1 est absorbé, pour une valeur D1 du débattement angulaire correspondant à ce jeu circonférentiel J1.

Entrent alors en action les ressorts de forte raideur 18B, jusqu'à leur saturation, qui intervient pour une valeur D2 du débattement angulaire formant la limite correspondante de celui-ci (droite a+b du diagramme).

Pour un fonctionnement "en rétro", un processus analogue se développe, les ressorts 18A, 18B, précédemment comprimés, se détendant d'abord, jusqu'à réapparition du jeu circonférentiel J1 pour les ressorts de forte raideur 18B, puis, dès que le couple s'annule et devient négatif, ce qui est quasi instantané, se comprimant à nouveau, le ressort de faible raideur 18A étant le premier à se recomprimer, et les ressorts de frote raideur 18B n'intervenant que pour un débattement angulaire D'1 correspondant à l'absorption du jeu circonférentiel J2 précisé ci-dessus.

Globalement, le ressort de faible raideur 18A agit ainsi seul dans une zone de filtration des bruits de point mort P allant du débattement angulaire D1 "en tirage", à un débattement angulaire D'1 "en rétro", et les ressorts de forte raideur 18B n'ajoutent leurs effets au ressort de faible raideur 18A que de part et d'autre de cette zone de filtration des bruits de point mort P.

Bien entendu, et pour une simplification du diagramme de la figure 6, il n'a pas été tenu compte ici du phénomène d'hystérésis se développant conjointement en raison des frottements internes de la friction.

Suivant l'invention, à une telle friction d'embrayage à moyeu amortisseur, qui comporte donc deux parties coaxiales A, B montées rotatives l'une par rapport à l'autre, dans les limites d'un débattement angulaire déterminé, et à l'encontre d'organes élastiques 18A, 18B aptes à agir circonférentiellement entre elles pour une plage au moins dudit débattement angulaire, il est incorporé un organe d'interposition 26, qui est sensible au débattement angulaire entre lesdites parties, à l'encontre de moyens de rappel, et qui est ainsi mobile de manière réversible entre une position rétractée d'attente, pour laquelle il est sans effet, et, au-delà d'une valeur déterminée dudit débattement, une position de service, pour laquelle, prenant circonférentiellement appui sur l'une quelconque desdites parties A, B, soit directement, soit indirectement, il est apte à fournir un appui circonférentiel à l'un au moins desdits organes élastiques 18A, 18B, en sorte que les caractéristiques de fonctionnement de l'ensemble s'en trouvent modifiées.

Dans l'exemple de réalisation représenté sur les figures 1 à 5, un seul organe d'interposition 26 est prévu.

Cet organe d'interposition 26 est porté par la partie excitée B, et il est apte à fournir par lui-même un appui circonférentiel à l'un des ressorts de forte raideur 18B, ainsi qu'il apparaîtra ci-après.

En pratique, dans l'exemple de réalisation représenté sur les figures 1 à 5, l'organe d'interposition 26 est formé de deux flasques identiques disposés, chacun respectivement de part et d'autre du voile de moyeu 11, entre celui-ci et la rondelle de guidage 12 correspondante, et montés conjointement rotatifs sur ce voile de moyeu 11, autour d'un axe 27 parallèle à l'axe de l'ensemble; par l'axe 27, l'organe d'interposition ainsi constitué prend donc circonférentiellement appui sur le voile de moyeu 11.

A l'une de ses extrémités, les flasques qui le constituent forment conjointement un bec 28 par lequel, en position de service, figure 5, il est susceptible de se crocheter circonférentiellement sur le ressort de forte raideur 18B concerné.

A son autre extrémité, les flasques qui le constituent présentent chacun en équerre, en direction opposée au voile de moyeu 11, une patte 29, qui, traversant avec jeu la rondelle de guidage 12 correspondante, à la faveur d'une boutonnière 30 ménagée à cet effet dans celle-ci, est en prise, au-delà de cette rondelle de guidage 12, avec un ressort 31 porté par celle-ci.

Les deux ressorts 31 ainsi mis en oeuvre forment conjointement les moyens de rappel associés à l'organe d'interposition 26.

Chacun de ces ressorts 31 comporte une partie médiane 32, par laquelle il est engagé a serrage sur la rondelle de guidage 12 correspondante, à la périphérie de celle-ci, à la faveur de deux échancrures en équerre 33 que comporte à cet effet celle-ci, et, deux ailes latérales 34, qui, s'étendant sensiblement radialement le long de cette rondelle de guidage 12, en direction de l'axe de l'ensemble, sont engagées élastiquement sur la patte 29 correspondante de l'organe d'interposition 26.

Pour des valeurs relativement faibles du débattement angulaire entre les parties A, B, et donc pour des valeurs relativement faibles du couple transitant par celles-ci, l'organe d'interposition 26 reste en position rétractée d'attente, figure 1, pour laquelle son bec de retenue 28 est à distance du ressort de forte raideur 18B concerné.

Le fonctionnement de la friction d'embrayage concernée est alors celui décrit ci-dessus, et le diagramme représentatif de ce fonctionnement est celui de la figure 6.

Pour une valeur suffisante, déterminée, du débattement angulaire entre les parties A, B, et donc du couple transitant par celles-ci, l'organe d'interposition 26, sous les effets des ressorts 31, qui sont entraînés par les rondelles de guidage 12, passe en position déployée de service, figure 5.

Dèslors, si le fonctionnement de l'ensemble passe d'un mode de fonctionnement "en tirage" à un mode de fonctionnement "en rétro", le bec de retenue 28 de l'organe d'interposition 26 se trouve interposé sur le trajet suivi par l'extrémité correspondante du ressort de forte raideur 18B concerné lors de son déploiement de détente caractéristique d'un tel passage, en sorte que le déploiement de détente de ce ressort de forte raideur 18B se trouve dès lors interrompu.

Par mesure de simplicité on supposera ci-après d'une part que cette interruption du déploiement de détente du ressort de forte raideur 18B en question intervient pour le débattement angulaire D1 précisé ci-dessus, et que ce ressort de forte raideur 18B a, au repos, une précontrainte supérieure à la raideur du ressort de faible raideur 18A.

Ce ressort de forte raideur 18B, alors en appui, d'une part, par l'une de ses extrémités, sur le bec 28 de l'organe d'interposition 26 suivant l'invention, qui est lié au voile de moyeu 11, et, d'autre part, à l'autre de ses extrémités, sur les rondelles de guidage 12 et le voile de moyeu 11, et donc ainsi sollicité en compression, s'oppose momentanément à la détente du ressort de faible raideur 18A.

Il en résulte une modification des caractéristiques de fonctionnement de la friction par rapport à ce qu'elles étaient antérieurement, l'organe d'interposition 26 suivant l'invention s'étant substitué, pour le ressort 18B concerné, au bord radial correspondant de la fenêtre 19 du voile de moyeu 11 dans laquelle il est logé, et tout se passant comme si le développement circonférentiel de cette fenêtre se trouvait ainsi modifié.

En pratique, cette modification se traduit, sur le diagramme de la figure 7, par une chute brutale du couple pour le débattement angulaire D1, puis par la poursuite de la décroissance de ce couple et du débattement angulaire suivant une pente supérieure à celle résultant de la raideur du seul ressort de faible raideur 18A.

Ainsi, ce ressort de faible raideur 18A est empêché d'intervenir seul pour les valeurs de couple faible lorsque, préalablement, le couple a dépassé une valeur déterminée, ce qui évite un basculement bruyant de cette friction lors du passage d'un fonctionnement en direct à un fonctionnement en rétro.

Bien entendu, pour les faibles couples, dès que le débattement angulaire entre la partie excitante A et la partie excitée B redevient inférieur à une valeur déterminée, correspondant à celle du point d'abscisse D1 dans l'exemple de réalisation envisagé, l'organe d'interposition 26 revient en position rétractée d'attente, sous la sollicitation des ressorts 31 qui en constituent les moyens de rappel.

Cependant, des moyens de frottement, non représentés sur les figures, sont de préférence prévus pour en retarder ce retour en position rétractée d'attente.

Si le ressort de forte raideur 18B avec lequel coopère l'organe d'interposition 26 n'a pas de précontrainte au repos, la chute de couple pour le débattement angulaire D1 ne se fait pas, comme précédemment, suivant une droite sensiblement verticale, mais suivant une droite légèrement inclinée.

Bien entendu, plusieurs ressorts de forte raideur 18B peuvent être concernés par l'intervention d'un ou plusieurs organes d'interposition 26, et, en pratique, il est prévu au moins deux organes d'interposition 26 en positions symétriquement opposées l'une par rapport à l'autre, pour éviter que leur intervention n'induise une quelconque composante radiale sur l'axe de l'ensemble.

Cependant, au moins pour certaines applications, il peut être intéressant que le nombre de ressorts 18B concernés par l'intervention d'un ou plusieurs organes d'interposition suivant l'invention soit tel qu'il en résulte une composante radiale sur l'axe de l'ensemble.

En effet, il se développe dans ce cas une hystérésis radiale variable, le déplacement radial de la partie A vis-à-vis de la partie B dû à une telle composante radiale induisant un frottement radial soit entre les rondelles de guidage 12 et les rondelles de frottement 21, soit entre les rondelles de frottement 21 et le voile de moyeu 11.

Pour d'autres applications, il peut de même être intéressant que la totalité des ressorts 18B en cause soient concernés par l'intervention d'un, ou plusieurs, organes d'interposition suivant l'invention; il en résulte en effet l'obtention d'une hystérésis particulière, lesdits ressorts jouant conjointement, d'un seul bloc, à couple constant, pour une portion du débattement angulaire entre les parties A, B concernées.

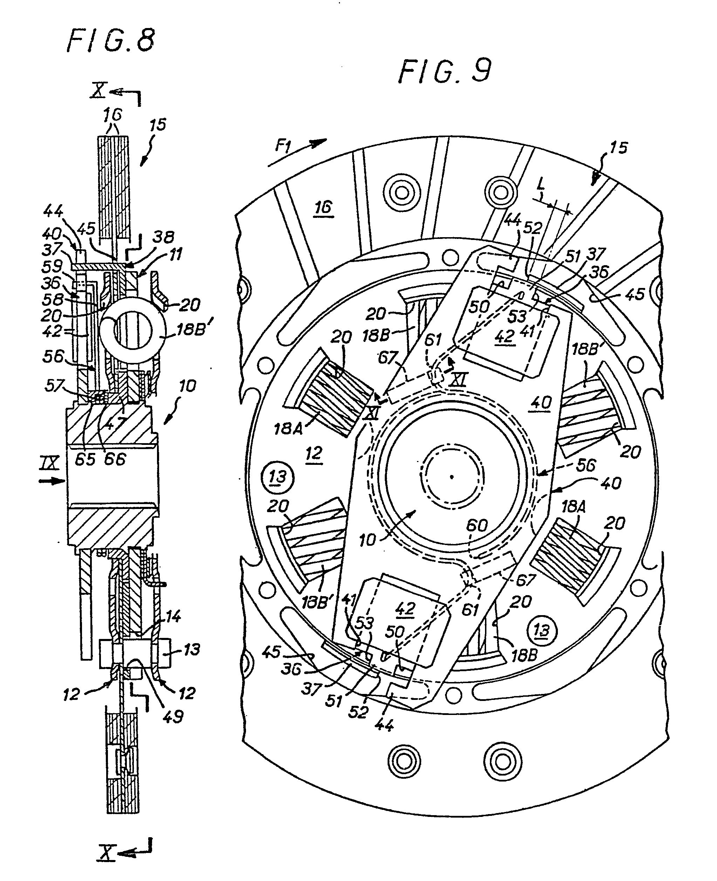

Dans les variantes de réalisation illustrées par les figures 8 à 13, il est associé à l'organe d'interposition 36 mis en oeuvre suivant l'invention, d'une part un organe d'appui 37, qui s'étend axialement, et avec lequel, en position déployée de service, il est apte à venir en appui circonférentiel positif, et d'autre part une plaque annulaire 38, qui est engagée par des évidements 39 sur les organes élastiques 18A, 18B prévus entre les parties A, B de la friction d'embrayage concernée, sans jeu circonférentiel pour l'un au moins de ceux-ci, et avec un jeu circonférentiel pour les autres, ainsi qu'il apparaîtra ci-après, et qui forme une pièce portant l'un quelconque des organes organe d'interposition 36-organe d'appui 37, tandis que l'autre desdits organes est solidaire d'une pièce appartenant à l'une quelconque desdites parties A, B.

En pratique, ces figures 8 à 11 illustrent à titre d'exemple l'application de l'invention à une friction d'embrayage du type de celle décrite dans le brevet français déposé le 24 Avril 1974 sous le No. 74 14147 et publié sous le No. 2.268.994, ainsi que dans l'addition, déposée le 20 Août 1974 sous le No. 74 28507 et publiée sous le No. 2.282.577, rattachée à ce brevet.

Une telle friction d'embrayage est analogue à celle décrite précédemment, avec toutefois les différences suivantes: tout d'abord deux ressorts de faible raideur 18A sont prévus en positions diamétralement opposées, et ceux-ci sont montés en opposition, l'un de ces ressorts se comprimant alors que l'autre se détend, et réciproquement, suivant le sens de rotation; ensuite, les ressorts de forte raideur sont répartis en deux groupes 18B, 18B', les jeux circonférentiels associés aux ressorts 18B se trouvant respectivement supérieures aux jeux circonférentiels associés aux ressorts 18B', en sorte que l'intervention des ressorts 18B' se trouve retardée par rapport à celle des ressorts 18B dans un sens de rotation comme dans l'autre (non détaillé sur les figures).

Dans ces formes de réalisation, il y a deux organes d'interposition 36, disposés en positions diamétralement opposées, à chacun d'eux est associé un organe d'appui 37, et les organes d'interposition 36 sont portés par la partie B, et plus précisément par le moyeu 10, les organes d'appui 37 associés étant quant à eux portés par la plaque annulaire 38.

Mais il va de soi qu'une disposition inverse pourrait être adoptée, les organes d'interposition 36 étant portés par la plaque annulaire 38 et les organes d'appui 37 par la partie A.

Il va de soi également que la partie B pourrait être substituée à la partie A dans l'un et l'autre cas.

En pratique, dans les formes de réalisation représentées, la plaque annulaire 38 associée aux organes d'interposition 36 est insérée axialement entre le voile de moyeu 11 et le disque de friction 15, au droit de la partie radiale du palier 47 usuellement inséré entre ce disque de friction 15 et la rondelle de guidage 12 correspondante, d'une part, et le moyeu 10, d'autre part, et les évidements 39 qu'elle comporte pour son engagement sur les ressorts 18A, 18B 18B' sont constitués par des échancrures qu'elle présente à sa périphérie interne.

Dans l'exemple de réalisation représenté, c'est sur les ressorts 18B que cette plaque annulaire 38 est engagée sans jeu par ses évidements 39 correspondants.

Autrement dit, pour les ressorts 18B, les évidements 39 sont ajustés au développement circonférentiel de ces ressorts, pour l'engagement sans jeu recherché, ledit développement circonférentiel correspondant à celui défini par les fenêtres 20 correspondantes des rondelles de guidage 12.

Par contre, pour les ressorts 18A et 18B', les évidements 39 de la plaque annulaire 38 débordent circonférentiellement de part et d'autre de ceux-ci.

De même, pour la traversée des colonnettes axiales 13, cette plaque annulaire 38 présente des boutonnières 49 que lesdites colonnettes 13 traversent avec jeu.

Ainsi, dans une telle forme de réalisation, le montage de la plaque annulaire 38 est flottant, cette plaque annulaire 38 n'étant, radialement, dans son plan, qu'au contact des seuls ressorts 18B, par les tranches radiales de ses évidements 39 correspondants.

Une telie disposition permet avantageusement une compensation d'éventuelles tolérances de fabrication et/ou de montage.

Mais il va de soi que, si désiré, un centrage rigide de la plaque annulaire 38 peut être obtenu, soit par les colonnettes axiales 13, soit par le palier 47, par contact avec de telles colonnettes ou un tel palier.

Suivant les formes de réalisation représentées, les organes d'interposition 36 mis en oeuvre suivant l'invention sont constitués de simples plaquettes.

Pour leur maintien et leur guidage, le moyeu 10 de la partie A porte radialement un flasque 40, qui en est solidaire en rotation, ce flasque étant par exemple, suivant une technique connue en elle-même, engagé à force sur le moyeu 10 et serti sur celui-ci, à l'extérieur du volume formé par les rondelles de guidage 12, d'un côté ou de l'autre de la friction.

Ce flasque 40 comporte deux guides qui sont allongés radialement, et avec chacun desquels est en prise une plaquette 36.

Dans l'exemple de réalisation représenté, un tel guide est simplement constitué par un évidement 41 du flasque 40 et la plaquette 36 correspondante est simplement montée coulissante dans un tel évidement 41.

Pour le maintien axial d'une plaquette 36, deux lamelles 42 sont rapportées sur celle-ci, par exemple par soudage, de part et d'autre du flasque 40, et ces lamelles 42 débordent circonférentiellement de l'évidement 41 correspondant, figures 8 et 9.

A l'extrémité de chaque évidement 41 le flasque 40 présente un bec de retenue 44, qui fait saillie circonférentiellement dans ledit évidement 41, figure 9.

Conjointement, les organes d'appui 37 associés aux organes d'interposition 36 sont constitués par des pattes qui s'étendent axialement en direction du flasque 40, à la faveur de passages 45 du disque de friction 15, et qui se prolongent axialement suffisamment pour interférer avec le trajet des plaquettes 36 dans les évidements 41 dans lesquels elles sont montées coulissantes.

Ces pattes 37 sont portées par la plaque annulaire 38.

Au-delà d'un épaulement 50 propre à coopérer en butée avec le bec de retenue 44 correspondant, chaque plaquette 36 comporte un prolongement radial 51 susceptible d'être pincé circonférentiellement entre ce bec de retenue 44 et la patte axiale 37 correspondante.

En pratique, pour la position de repos représentée à la figure 9, le développement circonférentiel L entre, d'une part, la tranche latérale 52 d'une patte axiale 37 la plus proche, circonférentiellement, du bec de retenue 44 correspondant, et, d'autre part, la tranche latérale 53 de la plaquette 36 correspondante la plus éloignée, circonférentiellement, de ce bec de retenue 44, correspond au plus, angulairement, au jeu circonférentiel J1 défini ci-dessus.

Et, bien entendu, chaque bec de retenue 44 a un développement circonférentiel suffisamment réduit pour ne pas s'opposer à un engagement, en regard de sa propre tranche latérale, du prolongement radial 51 de la plaquette 36 correspondante.

Dans l'exemple de réalisation représenté sur les figures 8 à 11, les deux plaquettes 36 ont en commun les moyens de rappel qui leur sont associés, et ceux-ci sont constitués par un ressort de torsion 56, dont la partie médiane de torsion 57 entoure le moyeu 10, et dont les branches 58 sont chacune respectivement en prise, par un retour axial 59, avec les plaquettes 36, un tel retour 59 étant engagé dans un passage prévu à cet effet dans une telle plaquette et replié à son extrémité au-delà de celui-ci.

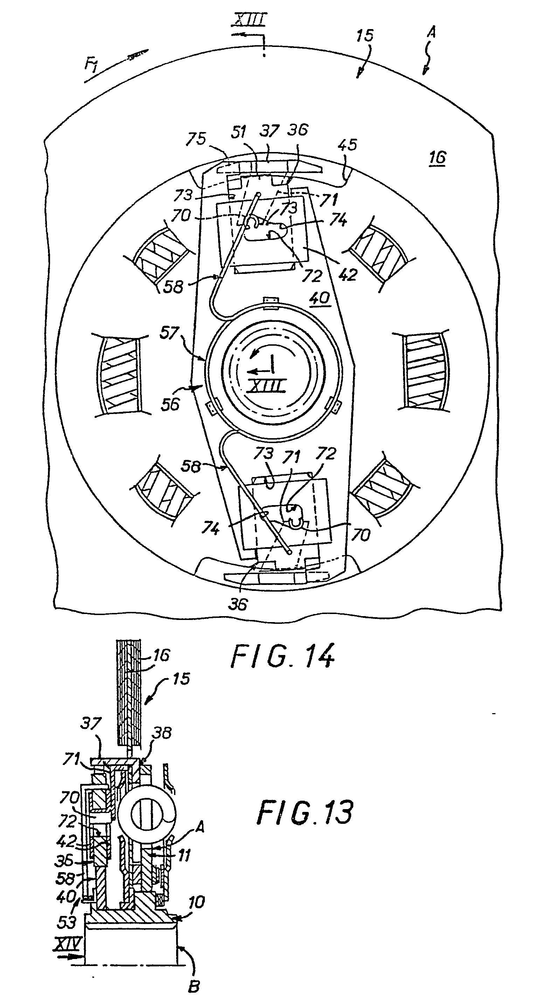

Dans l'exemple de réalisation représenté, le ressort de torsion 56 est axialement disposé entre le flasque 40 et la rondelle de guidage 12 correspondante, mais il va de soi que, en variante, il peut être disposé axialement au-delà de ce flasque 40 par rapport à cette rondelle de guidage 12; c'est le cas d'ailleurs dans la variante de réalisation illustrée par les figures 13, 14.

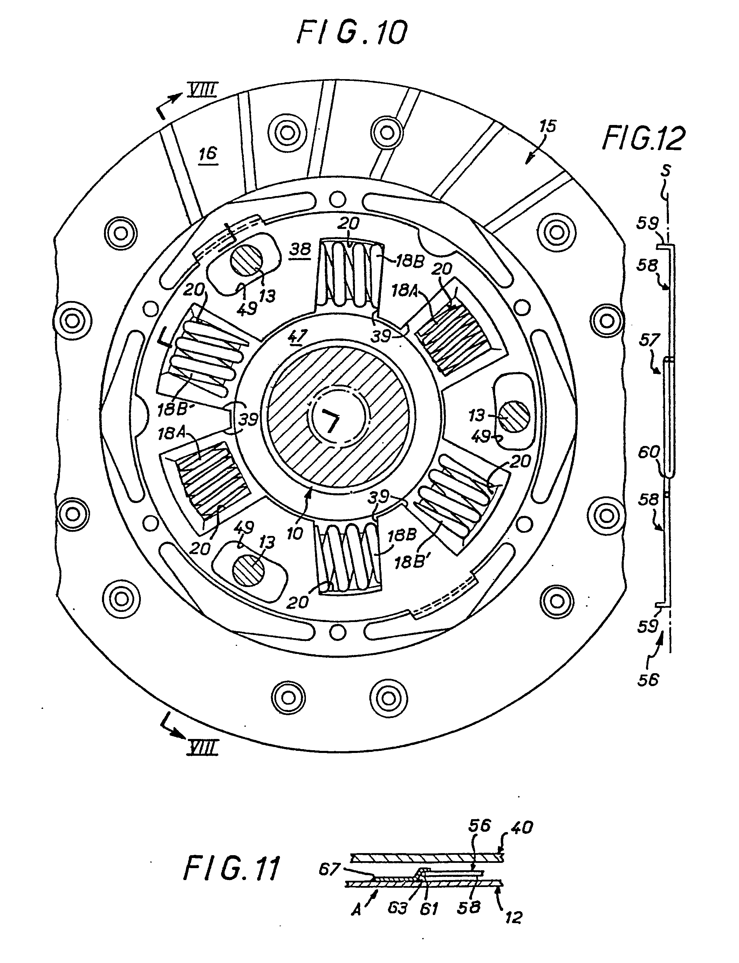

Suivant une particularité de l'invention, et ainsi qu'il est visible à la figure 12, la partie médiane de torsion 57 du ressort 56 dont sont issues les branches 58 de celui-ci résulte d'un enroulement conjoint en hélice des deux brins d'un fil au préalable plié en U.

Autrement dit, cette partie médiane de torsion 57 présente une extrémité, elle fait un coude 60 à cette extrémité, et le plan transversal, perpendiculaire à l'axe de l'ensemble, qui passe par ce coude 60 est un plan de symétrie S pour le ressort 56; ce plan de symétrie S est schématisé en trait interrompu à la figure 12.

A son raccordement à la partie médiane 57 dont elle est issue, chaque branche 58 du ressort 56 forme un coude 61, en direction de la plaquette 36 correspondante, figures 9 et 11.

A la périphérie interne de la partie médiane de torsion 57 du ressort 56, des plaquettes en équerre sont rapportées de place en place, par exemple par soudure, sur la rondelle de guidage 12 concernée, pour un maintien convenable de ce ressort de torsion 57 (non détaillé sur les figures).

En outre, pour passage en position déployée de service des plaquettes 36, la partie médiane de torsion 57 du ressort de torsion 56 est bloquée angulairement sur le moyeu 10 qu'elle entoure, qui appartient à la partie excitée B, et à chacune des branches 58 de ce ressort de torsion 56 il est associé un épaulement 63, qui est solidaire de la partie excitante A, et sur lequel une telle branche 58 est susceptible de venir porter par son coude 61.

Dans l'exemple de réalisation représenté, la solidarisation au moyeu 10 de la partie médiane de torsion 57 du ressort de torsion 56 se fait par pincement, cette partie médiane se trouvant disposée entre, d'une part deux bossages 65, diamétralement opposés, du flasque 40 solidaire du moyeu 10, et, d'autre part, des pattes 66 rapportées, par exemple par soudage, sur ces bossages 65; sur les figures, un seul de ces bossages 65 est visible, figure 8.

En outre, dans l'exemple de réalisation représenté, chaque épaulement 63 est formé en bout d'une patte 67 rapportée, par exemple par soudage, sur la rondelle de guidage 12 correspondante, qui appartient à la partie excitante A, figure 11.

A l'arrêt, figure 9, les plaquettes 36 constituant les organes d'interposition suivant l'invention occupent en pratique leur position rétractée d'attente, en appui contre le fond de l'évidement 41 correspondant du flasque 40.

Ces plaquettes 36 sont alors sans effet.

Lorsque, pour un fonctionnement en tirage, la friction tournant dans le sens de la flèche F1 de la figure 9, un couple est appliqué au disque de friction 15 suivant cette flèche F1, seuls sont d'abord à intervenir, entre les deux parties A, B constitutives de la friction, pour la transmission de ce couple, les ressorts de faible raideur 18A; puis, entrent successivement en action, d'abord les ressorts 18B, et enfin les ressorts 18B'.

Mais, pour un tel fonctionnement en tirage, et au fur et à mesure du débattement angulaire correspondant entre la partie excitante A et la partie excitée B, les épaulements 63 prévus à cet effet sur la partie excitante A viennent pousser les coudes 61 des branches 58 du ressort de torsion 56, et, sous cette sollicitation, celles-ci provoquent progressivement un déplacement radial des plaquettes 36 le long de leurs guides, en direction du bec de retenue 44 correspondant.

Conjointement, les pattes axiales 37 de la plaque annulaire 38 s'écartent progressivement, circonférentiellement, de ces becs de retenue 44, la plaque annulaire 38 étant alors liée en rotation aux rondelles de guidage 12 par les ressorts 18B puisque, par ses évidements 39 correspondants, elle est engagée sans jeu sur ceux-ci.

Pour une valeur déterminée du débattement angulaire entre la partie excitante A et la partie excitée B, qui peut par exemple correspondre à la valeur de ce débattement pour laquelle entrent en action les ressorts 18B, les plaquettes 36, sous la sollicitation des branches 58 du ressort 56 occupent une position déployée de service pour laquelle elles sont radialement en butée, par leur épaulement 50, contre les becs de retenue 44, et ont leur prolongement radial 51 circonférentiellement inséré entre ceux-ci et les pattes axiales 37 de la plaque annulaire 38.

Si le fonctionnement continue à être un fonctionnement "en tirage", c'est-à-dire si le couple à transmettre entre les parties A, B constitutives de la friction d'embrayage concernée continue à croître, le débattement angulaire entre lesdites parties A, B continue à se déployer jusqu'à sa valeur finale, suivant un processus analogue à celui décrit ci-dessus.

Par contre, si, par relâchement de l'action d'enfoncement précédemment exercée sur l'accélérateur du véhicule concerné, le fonctionnement de l'ensemble passe d'un tel fonctionnement "en tirage" à un fonctionnement "en rétro", et que, dès lors, la partie excitée B de la friction constituée du moyeu 10 et du voile de moyeu 11 connaît un mouvement angulaire relatif rétrograde vis-à-vis de la partie excitante A de cette friction constituée des rondelles de guidage 12 et du disque de friction 15, les plaquettes 36 constituant les organes d'interposition suivant l'invention sont alors en mesure d'intervenir sur le déploiement de détente des ressorts de forte raideur 18B lors d'un tel passage d'un mode de fonctionnement "en direct" à un mode de fonctionnement "en rétro", en offrant un appui circonférentiel positif à ces ressorts 18B par l'intermédiaire de la plaque annulaire 38.

En effet, prenant circonférentiellement appui sur la partie excitée B, puisqu'ils en sont solidaires en rotation, et leur prolongement radial venant en appui circonférentiel positif avec les pattes axiales 37 de la plaque d'appui 38, du fait d'une part de leur position déployée de service, et d'autre part du mouvement angulaire rétrograde de la partie excitée B à laquelle ils sont liés, ils offrent alors, au terme de ce mouvement rétrograde, un appui circonférentiel positif à la plaque d'appui 38.

Les caractéristiques de fonctionnement de la friction d'embrayage concernée s'en trouvent modifiées, les organes d'interposition 36 se substituant ainsi, par l'intermédiaire de la plaque annulaire 38, aux bords radiaux correspondants des fenêtres 19 du voile de moyeu 11 dans lesquelles sont logés les ressorts de forte raideur 18B et modifiant donc le développement circonférentiel de ces fenêtres.

En pratique, toute plage de filtration due aux seuls ressorts de faible raideur 18A se trouve alors éliminée.

Pour la position déployée de service des plaquettes 36, un jeu peut subsister circonférentiellement entre le prolongement radial 51 de ces plaquettes 36 et le bec de retenue 44 correspondant, l'appui de ces plaquettes 36 sur le flasque 40 se faisant, par leur tranche latérale correspondante, dans l'évidement 41 correspondant de ce flasque 40; en variante, le prolongement radial 51 d'une plaquette 36 peut porter circonférentiellement sur le bec de retenue 44 correspondant, les becs de retenue 44 ayant alors une double fonction d'appui circonférentiel et de retenue radiale.

Bien entendu, comme précédemment, pour les faibles couples, dès que le débattement angulaire entre la partie excitante A et la partie excitée B redevient inférieur, les plaquettes 36 échappent aux pattes axiales 37 de la plaque d'appui 38 et sont ramenées progressivement en position rétractée d'attente par les branches 58 du ressort de torsion 56 auquel elles sont attelées, et, également comme précédemment, des moyens de frottement non représentés sur les figures, sont de préférence prévus entre ces plaquettes 36 et les évidements 41 dans lesquels elles sont montées coulissantes, pour en retarder le retour en position rétractée d'attente.

Dans ce qui précède, les organes élastiques concernés par les organes d'interposition suivant l'invention sont les seuls ressorts de forte raideur 18B, le développement circonférentiel L précisé ci-dessus ayant une valeur appropriée à cet effet.

Mais il va de soi que, suivant les effets recherchés, cette valeur L peut être modifiée, de manière par exemple à ce que les ressorts de faible raideur 18A soient également concernés, ou que les ressorts de forte raideur 18B' soient les seuls concernés, la plaque annulaire 38 étant établie en conséquence.

D'une manière générale, quelle que soit la forme de réalisation de l'invention, l'intervention d'un organe d'interposition suivant l'invention peut se faire sur n'importe lequel des organes élastiques interposés circonférentiellement entre les parties A, B.

Suivant la variante de réalisation illustrée par les figures 13 à 14, des moyens de came sont prévus entre les plaquettes 36 et la plaque annulaire 38.

Dans l'exemple de réalisation représenté, ces moyens de came comportent, pour chaque plaquette 36, un doigt 70, porté axialement par une équerre 71 solidaire de la patte axiale 37 correspondante de la plaque annulaire 38, et une boutonnière 72 à flanc oblique 73, ménagée dans une telle plaquette 36, ledit doigt 70 étant engagé dans ladite boutonnière 72 en portant contre le flanc oblique 73 de celle-ci.

En pratique, dans l'exemple de réalisation représenté, la boutonnière 72 comporte, en bout de son flanc oblique 73, un prolongement circonférentiel 74.

Le fonctionnement de cette variante de réalisation est analogue à celui décrit précédemment: au fur et à mesure du débattement angulaire entre la partie excitante A et la partie excitée B, les doigts 70 associés axu plaquettes 36 provoquent progressivement un déplacement radial de celles-ci les conduisant, pour une valuer déterminée de ce débattement, à venir s'insérer circonférentiellement, par leur prolongement radial 51, entre les becs de retenue 44 et les pattes axiales 37.

Si un tel débattement angulaire se poursuit, les doigts 70 suivent les prolongements circonférentiels 74 des boutonnières 72 sans interférence sur le fonctionnement de l'ensemble.

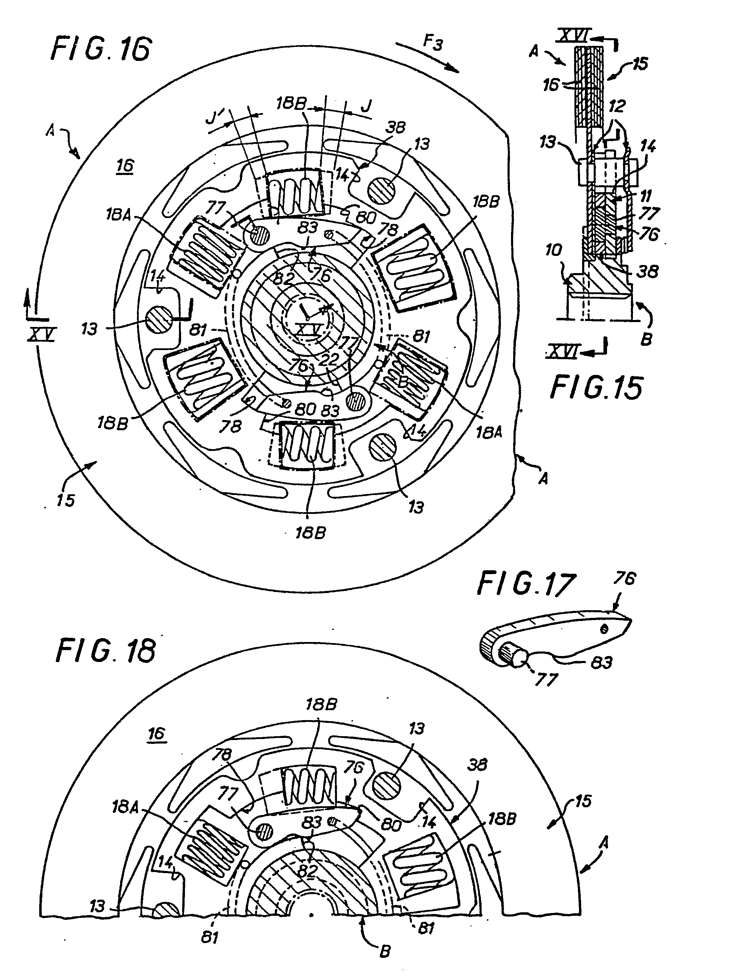

Dans la variante de réalisation illustrée par les figures 15 à 18, les organes d'interposition mis en oeuvre suivant l'invention sont des leviers d'arc-boutement 76, qui sont chacun montés rotatifs sur le voile de moyeu 11 par un tourillon 77, et qui sont chacun disposés dans un évidement 78 de la plaque annulaire 38 prévu à cet effet à la périphérie interne de celle-ci.

Dans l'exemple de réalisation représenté, l'organe d'appui associé à un tel levier d'arc-boutement 76 est un épaulement de butée 80, qui est prévu à cet effet sur la plaque annulaire 38, et qui, formé, dans cet exemple de réalisation, à la faveur de l'évidement 78 correspondant de celle-ci, s'étend axialement, comme précédemment.

En outre, les moyens de rappel associés à un tel levier d'arc-boutement 76 comportent un ressort 81, qui, à une extrémité, est attelé à ce levier d'arc-boutement 76, et qui, par son autre extrémité, est attelé à la plaque annulaire 38, à la faveur de l'autre évidement 78 de celle-ci.

Pour passage d'un levier d'arc-boutement 76 de sa position rétractée d'attente à sa position déployée de service, desmoyens de came sont prévus entre un tel levier d'arc-boutement 76 et la plaque annulaire 38.

Dans l'exemple de réalisation représenté, ces moyens de came comportent une rampe 82, ménagée sur le bord circonférentiel le plus interne de l'évidement 78 correspondant de la plaque annulaire 38, et une rampe 83 ménagée sur la tranche correspondante du levier d'arc-boutement 76 concerné.

Lors d'un fonctionnement en tirage, la partie excitante A étant entraînée en rotation suivant la flèche F1 de la figure 16, elle tourne dans le même sens vis-à-vis de la partie excitée B tout en entraînant celle-ci, et, dans un premier temps, pour une première plage du débattement angulaire correspondant, seuls interviennent les ressorts de faible raideur 18A.

Pour cette première plage du débattement angulaire les leviers d'arc-boutement 76 demeurent en position rétractée d'attente, figure 16, sous la sollicitation des ressorts 81.

Cette situation se poursuit jusqu'à ce que, le couple transmis de la partie excitante A à la partie excitée B augmentant, le débattement angulaire entre ces parties A, B atteigne comme précédemment une valeur déterminée.

Dès lors, sous la commande des rampes 82 de la plaque annulaire 38, les leviers d'arc-boutement 76 passent en position déployée de service, figure 18, pour laquelle l'extrêmité libre de chacun d'eux est sensiblement sur une même circonférence que l'épaulement de butée 80 prévu à cet effet sur cette plaque annulaire 38.

S'il se produit alors une inversion de couple, qui caractérise en passage d'un fonctionnement en tirage à un fonctionnement en rétro, les leviers d'arc-boutement 76 viennent en prise avec la plaque annulaire 38, avec les mêmes conséquences que précédemment.

Dès que le couple est revenu à une valeur suffisante, les leviers d'arc-boutement 76 sont reppelés en position rétractée d'attente par les ressorts 81.

Bien entendu, comme précédemment, des moyens de frottement sont prévus entre le tourillon 77 d'un tel levier d'arc-boutement 76 et le logement du voile de moyeu 11 dans lequel ce tourillon est engagé, pour retarder le retour en position rétractée de ce levier d'arc-boutement.

Ainsi qu'on l'aura compris, dans toutes les formes de réalisation décrites ci-dessus, le ou les organe(s) d'interposition mis en oeuvre suivant l'invention sont inévitablement sensibles à la force centrifuge, et celle-ci peut avoir un effet sur eux, en pratique aux vitesses suffisamment élevées, notamment pour leur maintien le temps voulu en position de service.

Mais leur passage de leur position rétractée d'attente à leur position déployée de service se fait de manière positive indépendamment de cette vitesse.

Il peut donc se faire, ce qui est le cas en pratique, à des vitesses insuffisantes pour que la force centrifugage ait un effet sensible.

De ce qui précède, il est aisé de comprendre que l'invention est susceptible d'être mise en oeuvre dans une grande diversité d'applications.

Elle ne se limite donc pas aux formes de réalisation et d'application plus particulièrement décrites et représentées, mais englobe toute variante.

En particulier, elle peut aussi bien s'appliquer au dispositif amortisseur de torsion comportant trois parties coaxiales montées rotatives l'une par rapport à l'autre deux à deux, tel que c'est le cas par exemple dans la friction d'embrayage décrite en détail dans le brevet français déposé le 29 Août 1973 sous le No. 73 31172, et publié sous le No. 2.242.606, ainsi que dans l'addition déposée le 12 Avril 1974 sous le No. 74 12915 et publiée sous le No. 2.270.491 rattachée à ce brevet.

Dans une telle friction, l'organe d'interposition suivant l'invention peut intervenir entre l'une ou l'autre quelconque des diverses parties coaxiales rotatives qu'elle comporte.

En outre, au lieu d'intervenir lors du passage d'un fonctionnement en tirage à un fonctionnement en rétro, l'organe d'interposition suivant l'invention peut aussi bien intervenir lors du passage d'un fonctionnement en rétro à un fonctionnement en tirage.

Enfin, le domaine d'application de l'invention ne se limite évidemment pas à celui des seules frictions d'embrayage pour véhicules automobiles, mais s'étend à l'ensemble de celui des dispositifs amortisseurs de torsion.

**Revendications**

1. Dispositif amortisseur de torsion, en particulier friction d'embrayage, du genre comportant au moins deux parties coaxiales (A, B) montées rotatives l'une par rapport à l'autre, dans les limites d'un débattement angulaire déterminé, et à l'encontre d'organes élastiques (18A, 18B, 18B') aptes à agir circonférentiellement entre elles pour une plage au moins dudit débattement angulaire, caractérisé en ce qu'il comporte au moins un organe d'interposition (26, 36, 76) qui est sensible au débattement angulaire entre lesdites parties, à l'encontre de moyens de rappel, et qui est ainsi mobile de manière réversible entre une position d'attente, pour laquelle il est sans effet et, au-delà d'une valeur déterminée dudit débattement, une position de service, pour laquelle, prenant circonférentiellement appui soit directement, soit indirectement sur l'une quelconque desdites parties (A, B), il est apte à fournir un appui circonférentiel à l'un au moins desdits organes élastiques (18A, 18B, 18B'), en sorte que les caractéristiques de fonctionnement du dispositif s'en trouvent modifiées.

2. Dispositif amortisseur de torsion suivant la revendication 1, caractérisé en ce que l'organe d'interposition (26) est poré par la dite partie (A, B), et est apte à fournir par lui-même un appui circonférentiel à l'organe élastique (18B) concerné.

3. Dispositif amortisseur de torsion suivant la revendication 2, caractérisé en ce que l'organe d'interposition (26) est monté rotatif sur la dite partie (A, B) autour d'un axe (27) parallèle à l'axe de l'ensemble.

4. Dispositif amortisseur de torsion suivant la revendication 3, caractérisé en ce que l'organe d'interposition (26) comporte un bec (28) par lequel, en position de service, il est susceptible de se crocheter circonférentiellement sur l'organe élastique (18B) concerné.

5. Dispositif amortisseur de torsion suivant la revendication 1, caractérisé en ce qu'il est associé à l'organe d'interposition (36, 76) d'une part un organe d'appui (37, 80) qui s'étend axialement et avec lequel, en position de service, il est apte à venir en appui circonférentiel positif, et d'autre part une plaque annulaire (38), qui est engagée par des évidements (39) sur les organes élastiques (18A, 18B, 18B') prévus entre lesdites parties, sans jeu circonférentiel pour celui (18B) au moins desdits organes élastiques qui est concerné, et avec un jeu circonférentiel pour les autres (18A, 18B'), et qui forme une pièce portant l'une quelconque (36, 76, 37, 80) desdits organes d'interposition (36, 76) et d'appui (37, 80), tandis que l'autre (37, 80, 36, 76) est solidaire d'une pièce appartenant à l'une quelconque desdites parties (A, B), en sorte que c'est par l'intermédiaire de ladite plaque annulaire (38) que l'organe d'interposition (36, 76) est apte à fournir un appui circonférentiel audit organe élastique (18B) concerné.

6. Dispositif amortisseur de torsion suivant la revendication 5, caractérisé en ce que l'organe d'interposition (36) est en prise avec un guide (41), et l'organe d'appui (37) qui lui est associé interfère avec le trajet de l'organe d'interposition (36) le long de son guide (41).

7. Dispositif amortisseur de torsion suivant la revendication 6, caractérisé en ce que l'organe d'interposition (36) est constitué par une simple plaquette, et son guide (41) est constitué par un évidement allongé radialement, qui est formé dans un flasque (40), et dans lequel ledit organe d'interposition (36) est monté coulissant.

8. Dispositif amortisseur de torsion suivant la revendication 7, caractérisé en ce que ledit flasque (40) présente, à l'extrémité de l'évidement (41) formant le guide de l'organe d'interposition (36), un bec de retenue (44) qui fait saillie dans ledit évidement (41), et, au-delà d'un épaulement (50) propre à coopérer radialement en butée contre ledit bec de retenue (44), ledit organe d'interposition (36) comporte un prolongement radial (51) sur lequel est susceptible de venir porter l'organe d'appui (37).

9. Dispositif amortisseur de torsion suivant l'une quelconque des revendications 6 à 8, caractérisé en ce que le guide (41) avec lequel est en prise l'organe d'interposition (36) appartient à la dite partie (A, B) et l'organe d'appui (37) est porté par la plaque annulaire (38) associée.

10. Dispositif amortisseur de torsion suivant la revendication 5, caractérisé en ce que les moyens de rappel associés à l'organe d'interposition (36) comportent un ressort de torsion (56), dont la partie médiane de torsion (57) entoure un moyeu (10) solidaire d'une première des parties rotatives (A, B) concernées, et dont une branche (58) est attelée audit organe d'interposition (36).

11. Dispositif amortisseur de torsion suivant la revendication 10, caractérisé en ce que, pour passage en position déployée de service de l'organe d'interposition (36), la branche (58) du ressort de torsion (56) attelée à cet organe d'interposition (36) présente un coude (61) par lequel elle est susceptible de venir porter contre un épaulement (63) solidaire de la deuxième des parties rotatives (A, B) concernées, et la partie médiane de torsion (57) dudit ressort (56) est bloquée angulairement, par exemple par pincement, vis-à-vis du moyeu (10) qu'elle entoure.

12. Dispositif amortisseur de torsion suivant la revendication 10, caractérisé en ce que, pour passage en position déployée de service de l'organe d'interposition (36), des moyens de came (70, 72) sont prévus entre celle-ci et la plaque annulaire (38).

13. Dispositif amortisseur de torsion suivant la revendication 12, caractérisé en ce que ces moyens de came (70, 72) comportent un doigt (70) porté axialement par la plaque annulaire (38), et une boutonnière (72) à flanc oblique (73) ménagée dans l'organe d'interposition (36), ledit doigt (70) étant engagé dans ladite boutonnière (72).

14. Dispositif amortisseur de torsion suivant la revendication 13, caractérisé en ce que ladite boutonnière (72) a un prolongement circonférentiel (74).

15. Dispositif amortisseur de torsion suivant l'une quelconque des revendications 1 à 14, caractérisé en ce qu'au moins deux organes d'interposition (26, 36) sont prévus en positions diamétralement opposées.

16. Dispositif amortisseur de torsion suivant les revendications 10 et 15, prises conjointement, caractérisé en ce que lesdits organes d'interposition (36) ont en commun leurs moyens de rappel, lesdits moyens de rappel étant constitués par le ressort de torsion (56), les deux branches (58) de celui-ci étant chacune respectivement attelées aux deux organes d'interposition (36) et sa partie médiane de torsion (57) résultant d'un enroulement conjoint en hélice des deux brins d'un fil au préalable plié en U.

17. Dispositif amortisseur de torsion suivant la revendication 5, caractérisé en ce que l'organe d'interposition (76) est un levier d'arc-boutement qui, à l'une de ses extrémités est monté pivotant sur la dite partie (A, B), autour d'un axe parallèle à celui de celles-ci, et qui, par son autre extrêmité, est susceptible de venir porter sur un épaulement de butée (80) prévu à cet effet sur la plaque annulaire (38) et formant l'organe d'appui associé.

18. Dispositif amortisseur de torsion suivant la revendication 17, caractérisé en ce que, pour passage en position déployée du levier d'arc-boutement des moyens de came sont prévus entre lui et la plaque annulaire.

19. Dispositif amortisseur de torsion suivant l'une quelconque des revendications 17, 18, caractérisé en ce que le levier d'arc-boutement s'étend globalement tangentiellement à une circonférence de l'ensemble.

20. Dispositif amortisseur de torsion suivant l'une quelconque des revendications 1 à 19, caractérisé en ce que des moyens de frottement sont prévus pour retarder le retour en position rétractée de l'organe d'interposition (26, 36) sous l'action des moyens de rappel qui lui sont associés.

21. Dispositif amortisseur de torsion suivant les revendications 1 à 20, caractérisé en ce que le nombre d'organes élastiques (18A, 18B, 18B') concernés par l'intervention d'un ou plusieurs organes d'interposition (26, 36) est tel qu'il en résulte une composante radiale sur l'axe de l'ensemble.

22. Dispositif amortisseur de torsion suivant les revendications 1 à 21, caractérisé en ce que tous les organes élastiques (18B, 18B') sont concernés par l'intervention d'un ou plusieurs organes d'interposition (26, 36).

23. Dispositif amortisseur de torsion, en particulier friction d'embrayage, du genre comportant au moins deux parties coaxiales (A, B) montées rotatives l'une par rapport à l'autre, dans les limites d'un débattement angulaire déterminé, et à l'encontre d'organes élastiques (18A, 18B, 18B') aptes à agir circonférentiellement entre elles pour une plage au moins dudit débattement angulaire, chacune desdites parties (A, B) comportant une pièce annulaire (12, 11) parallèlement l'une à l'autre, et lesdits organes élastiques (18A, 18B, 18B') étant chacun individuellement logés pour partie dans une fenêtre (20) de la pièce annulaire (12) de l'une desdites parties et pour partie dans une fenêtre (19) de la pièce annulaire (11) de l'autre desdites parties, caractérisé en ce qu'il comporte au moins un organe (26, 36), dit ci-après par commodité organe d'interposition, qui est sensible au débattement angulaire entre lesdites parties (A, B), à l'encontre de moyens de rappel, et qui est ainsi mobile de manière réversible, entre une position d'attente, pour laquelle il est sans effet, et, au-delà d'une valeur déterminée dudit débattement, une position de service pour laquelle pour l'un au moins desdits organes élastiques (18A, 18B, 18B'), il se substitue, soit directement, soit indirectement, à l'un des bords radiaux d'une des fenêtres (19, 20) dans lesquelles est logé ledit organe élastique (18A, 18B, 18B').

24. Dispositif amortisseur de torsion suivant la revendication 1 caractérisé en ce que, les organes élastiques (18A, 18B, 18B') étant de raideurs différentes, l'organe d'interposition (26, 36, 76) est apte à fournir un appui circonférentiel à l'un au moins des organes élastiques (18B, 18B') de forte raideur, en sorte que le ou les ressort(s) de faible raideur (18A) sont ainsi empêchés d'intervenir seul(s) pour les valeurs de couple faibles.

25. Dispositif amortisseur de torsion suivant la revendication 1, caractérisé en ce que, les organes élastiques (18A, 18B, 18B') étant de raideurs différentes, et organe d'interposition (26, 36, 76) est apte à fournir un appui circonférentiel à l'un au moins des organes élastiques (18B, 18B') de forte raideur.

26. Dispositif amortisseur de torsion, suivant la revendication 1 caractérisé en ce que, les organes élastiques (18A, 18B, 18B') étant de raideurs différentes, l'organe d'interposition (26, 36, 76) est apte à fournir un appui circonférentiel à l'un au moins des organes élastiques (18B, 18B') de forte raideur, en sorte que ledit organe élastique de forte raideur est ainsi empêché de devenir inactif, au moins en rétro, pour les valeurs de couples faibles.

## Patentansprüche

1. Vorrichtung zum Dämpfen von Drehschwingungen, insbesondere Reibungskupplung, mit wenigstens zwei koaxialen Teilen (A, B), die relativ zueinander innerhalb der Grenzen eines bestimmten Winkelwegs und gegen in Umfangsrichtung für mindestens einen Bereich der Winkelbewegung zwischen diesen wirksamen elastischen Organen (18A, 18B, 18B') drehbar sind, dadurch gekennzeichnet, daß die Vorrichtung wenigstens ein Zwischenglied (26, 36, 76) aufweist, das auf Winkelbewegungen zwischen den Teilen (A, B) und gegen eine Rückholeinrichtung anspricht, und das zwischen einer Wartestellung, in der es wirkungslos ist, und, jenseits eines vorbestimmten Wertes des Winkelwegs, einer Betriebsstellung reversibel bewegbar ist, in welcher es durch unmittelbare oder mittelbare Abstützung in Umfangsrichtung an einem der Teile (A, B) eine Abstützung in Umfangsrichtung für wenigstens eines der elastischen Organe (18A, 18B, 18B') derart darstellt, daß die Betriebskennungen der Vorrichtung veränderbar sind.

2. Vorrichtung nach Anspruch 1, dadurch gekennzeichnet, daß das Zwischenglied (26) von dem Teil (A, B) getragen ist und selbst eine Abstützung in Umfangsrichtung für das betreffende elastische Organ (18B) bildet.

3. Vorrichtung nach Anspruch 2, dadurch gekennzeichnet, daß das Zwischenglied (26) um eine zur Achse der Vorrichtung parallele Achse (27) drehbar an dem Teil (A, B) gelagert ist.

4. Vorrichtung nach Anspruch 3, dadurch gekennzeichnet, daß das Zwischenglied (26) eine Haltenase (28) aufweist, mit welcher es sich in Betriebsstellung in Umfangsrichtung am elastischen Organ (18B) einhakt.

5. Vorrichtung nach Anspruch 1, dadurch gekennzeichnet, daß dem Zwischenglied (36, 76) einerseits eine Abstützung (37, 80), die sich axial erstreckt und gegen die es in Betriebsstellung in Umfangsrichtung formschlüssig zur Anlage kommt, und andererseits eine ringförmige Platte (38) zugeordnet ist, die über Aussparungen (39) mit den zwischen den Teilen vorgesehenen elastischen Organen (18A, 18B, 18B') in Eingriff steht, und zwar ohne Umfangsspiel für wenigstens dasjenige elastische Organ (18B), das es angeht, und mit Umfangsspiel für die anderen elastischen Organe (18A, 18B'), und die irgendeines (36, 76, 37, 80) der Zwischenglieder (36, 76) und der Abstützungen (37, 80) trägt, während das andere (37, 80, 36, 76) mit einem zu den Teilen (A, B) gehörigen Teil verbunden ist, derart, daß über die ringförmige Platte (38) das Zwischenglied (36, 76) dem betroffenen elastischen Organ (18B) eine Umfangsabstützung bietet.

6. Vorrichtung nach Anspruch 5, dadurch gekennzeichnet, daß das Zwischenglied (36) mit einer Führung (41) in Eingriff ist und die diesem zugeordneten Abstützung (37) in die Bewegungsbahn des Zwischenglieds (36) entlang seiner Führung (41) eingreift.

7. Vorrichtung nach Anspruch 6, dadurch gekennzeichnet, daß das Zwischenglied (36) aus einer Platte besteht, und daß seine Führung (41) als radial verlängerte Aussparung ausgebildet ist, welche in einem Flansch (40) vorgesehen und in welcher das Zwischenglied (36) verschiebbar gelagert ist.

8. Vorrichtung nach Anspruch 7, dadurch gekennzeichnet, daß der Flansch (40) am Ende der die Führung für das Zwischenglied (36) bildenden Aussparung (41) eine Haltenase (44) aufweist, welche in die Aussparung (41) hineinragt, und daß jenseits einer Schulter (50) für die radiale Anlage gegen die Haltenase (44) das Zwischenglied (36) eine radiale Verlängerung (51) hat, an welcher das Stützorgan (37) zur Anlage kommt.

9. Vorrichtung nach einem der Ansprüche 6 bis 8, dadurch gekennzeichnet, daß die Führung (41), mit der das Zwischenglied (36) in Eingriff ist, dem Teil (A, B) zugehört und daß das Stützorgan (37) durch die zugehörige ringförmige Platte (38) getragen ist.

10. Vorrichtung nach Anspruch 5, dadurch gekennzeichnet, daß die dem Zwischenglied (36) zugeordnete Rückholeinrichtung eine Torsionsfeder (56) aufweist, deren mittlerer Torsionsbereich (57) eine Nabe (10) umgibt, welche mit einem ersten der drehbaren Teile (A, B) verbunden ist und deren einer Arm (58) an dem Zwischenglied (36) festgelegt ist.

11. Vorrichtung nach Anspruch 10, dadurch gekennzeichnet, daß für den Übergang in die ausgefahrene Betriebsstellung des Zwischengliedes (36) der mit diesem gekoppelte Arm (58) der Torsionsfeder (56) eine Biegung (61) aufweist, mit der er an einem Anschlag (63) abstützbar ist, welcher mit dem zweiten der drehbaren Teile (A, B) verbunden ist, und daß der mittlere Torsionsbereich (57) der Torsionsfeder (56) hinsichtlich des Winkels gegenüber der Nabe (10), beispielsweise durch Einklemmen, blockiert ist.

12. Vorrichtung nach Anspruch 10, dadurch gekennzeichnet, daß zum Übergang in die ausgefahrene Betriebsstellung des Zwischengliedes (36) zwischen diesem und der ringförmigen Platte (38) eine Nockeneinrichtung (70, 72) vorgesehen ist.

13. Vorrichtung nach Anspruch 12, dadurch gekennzeichnet, daß die Nockeneinrichtung (70, 72) einen Finger (70), welcher axial verlaufend von der ringförmigen Platte (38) getragen ist, und eine im Zwischenglied (36) vorgesehene Aussparung (72) mit schräger Flanke (73) aufweist, und daß der Finger (70) in diese Aussparung (72) eingreift.

14. Vorrichtung nach Anspruch 13, dadurch gekennzeichnet, daß die Aussparung (72) eine kreisförmige Verlängerung (74) aufweist.

15. Vorrichtung nach einem der Ansprüche 1 bis 14, dadurch gekennzeichnet, daß wenigstens zwei Zwischenglieder (26, 36) sich diametral gegenüberliegend vorgesehen sind.

16. Vorrichtung nach den Ansprüchen 10 und 15 gemeinsam, dadurch gekennzeichnet, daß die Zwischenglieder (36) ihre Rückholeinrichtung gemeinsam haben, welche durch die Torsionsfeder (56) gebildet ist, deren beide Arme (58) jeweils mit einem der beiden Zwischenglieder (36) verbunden sind und deren mittlerer Torsionsbereich (57) aus einer gemeinsamen Schraubenwindung zweier Drahtabschnitte besteht, die zuvor U-förmig gebogen sind.

17. Vorrichtung nach Anspruch 5, dadurch gekennzeichnet, daß das Zwischenglied (76) ein Sperrhebel ist, welcher an einem Ende am Teil (A, B) um eine zu der Achse dieser Teile parallele Achse schwenkbar gelagert ist und dessen anderes Ende zur Anlage an einer Anschlagschulter (80) kommt, welche hierzu an der ringförmigen Platte (38) vorgesehen ist und die zugehörige Abstützung bildet.

18. Vorrichtung nach Anspruch 17, dadurch gekennzeichnet, daß für den Übergang in die ausgefahrene Stellung des Klemmhebels zwischen diesem und der ringförmigen Platte eine Nockeneinrichtung vorgesehen ist.

19. Vorrichtung nach einem der Ansprüche 17 oder 18, dadurch gekennzeichnet, daß sich der Klemmhebel (76) im wesentlichen tangential zu einer Umfangslinie der Vorrichtung erstreckt.

20. Vorrichtung nach einem der Ansprüche 1 bis 19, dadurch gekennzeichnet, daß eine Reibvorrichtung zur Verzögerung der Rückkehr des Zwischenglieds (26, 36) unter der Wirkung der diesem zugeordneten Rückholeinrichtung vorgesehen ist.

21. Vorrichtung nach einem der Ansprüche 1 bis 20, dadurch gekennzeichnet, daß die Anzahl der elastischen Organe (18A, 18B, 18B') für den Eingriff eines oder mehrerer Zwischenglieder (26, 36) derart ist, daß sich daraus eine radiale Komponente auf die Achse der Einrichtung ergibt.

22. Vorrichtung nach den Ansprüchen 1 bis 21, dadurch gekennzeichnet, daß alle elastischen Organe (18B, 18B') vom Eingriff eines oder mehrerer Zwischenglieder (26, 36) betroffen sind.

23. Vorrichtung zum Dämpfen von Drehschwingungen, insbesondere Reibungskupplung, mit wenigstens zwei koaxialen Teilen (A, B), die relativ zueinander innerhalb der Grenzen eines bestimmten Winkelwegs und gegen in Umfangsrichtung für mindestens einen Bereich der Winkelbewegung zwischen diesen wirksamen elastischen Organen (18A, 18B, 18B') drehbar sind, wobei jeder Teil (A, B) ein ringförmiges Teil (11, 12) aufweist, das zum anderen parallel ist, und die elastischen Organe (18A, 18B, 18B') jeweils einzeln teilweise in einem Fenster (20) des ringförmigen Teils (12) eines der Teile und teilweise in einem Fenster (19) des ringförmigen Teils (11) des anderen Teils angeordnet sind, dadurch gekennzeichnet, daß die Vorrichtung wenigstens ein Zwischenglied (26, 36) aufweist, das auf Winkelbewegungen zwischen den Teilen (A, B) und gegen eine Rückholeinrichtung anspricht, und das zwischen einer Wartestellung, in der es wirkungslos ist, und, jenseits eines vorbestimmten Wertes des Winkelwegs, einer Betriebsstellung reversibel bewegbar ist, in welcher es sich für wenigstens eines der elastischen Organe (18A, 18B, 18B') unmittelbar oder mittelbar an die Stelle eines radialen Randes eines der Fenster (19, 20) setzt, in welcher das elastische Organ (18A, 18B, 18B') eingesetzt ist.

24. Vorrichtung nach Anspruch 1, dadurch gekennzeichnet, daß die elastischen Organe (18A, 18B, 18B') unterschiedliche Federstärken besitzen, und daß das Zwischenorgan (26, 36, 76) einen Anschlag in Umfangsrichtung für zumindest eines der elastischen Organe (18B, 18B') großer Federstärker bildet, und zwar derart, daß die eine oder die mehreren Federn geringer Federstärke (18A) somit gehindert sind, lediglich bei einem Drehmoment mit geringen Werten einzugreifen.

25. Vorrichtung nach Anspruch 1, dadurch gekennzeichnet, daß die elastischen Organe (18A, 18B, 18B') unterschiedliche Federstärken aufweisen, und daß das Zwischenglied (26, 36, 76) eine Abstützung in Umfangsrichtung für mindestens eines der elastischen Organe (18B, 18B') großer Federstärke bietet.

26. Vorrichtung nach Anspruch 1, dadurch gekennzeichnet, daß die elastischen Organe (18A, 18B, 18B') unterschiedliche Federstärken aufweisen, und daß das Zwischenglied (26, 36, 76) in Umfangsrichtung für mindestens eines der elastischen Organe (18B, 18B') großer Federstärker eine Abstützung liefert, derart, daß zumindest für den Rückwärtsbetrieb, das genannte elastischen Organ großer Federstärker auf diese Wiese gehindert wird, bei niedrigen Momentenwerten inaktiv zu werden.

## Claims

1. Torsion damper device, particularly a clutch plate, of the type comprising at least two coaxial parts (A, B) mounted for rotation relative to one another, within the limits of predetermined angular movement, and against the action of elastic members (18A, 18B, 18B') adapted to act circumferentially between them for at least a range of the said angular movement, characterised in that it comprises at least one interposition means (26, 36, 76, 102) which is sensitive to the angular movement between the said parts, against the action of return means, and which is thus movable reversibly between a standby position, in which it is inoperative, and, beyond a predetermined value of the said movement, an operating position, in which, directly or indirectly bearing circumferentially on either one of the said parts (A, B), it is adapted to provide circumferential support for at least one of the said elastic members (18A, 18B, 18B') so that the operational characteristics of the device are thereby modified.

2. Torsion damper device according to Claim 1, characterised in that the interposition means (26) is carried by the said one part (A, B) and is adapted to provide, by itself, circumferential support for the elastic member (18B) in question.

3. Torsion damper device according to Claim 2, characterised in that the interposition means (26) is mounted for rotation on one of the said parts (A, B), about a pin (27) parallel to the axis of the entire device.

4. Torsion damper device according to Claim 3, characterised in that the interposition means (26) comprises a nose (28) by means of which, in the operating position, it is capable of hooking circumferentially onto the elastic member (18B) in question.

5. Torsion damper device according to claim 1, characterised in that there are associated with the interposition means (36, 76), on the one hand, a support means (37, 80), which extends axially and with which, in the operating position, the said member is adapted to come into positive circumferential support, and on the other hand, an annular plate (38), which is engaged by means of recesses (39) on the elastic members (18A, 18B, 18B') provided between the said parts, without circumferential play at least for that member (18B) of the said elastic members in question, and with circumferential play for the other elastic members (18A, 18B') and which forms a piece (36, 76, 37, 80) carrying any one of the said interposition means (36, 76) and support means (37, 80), while the other (37, 80, 36, 76) is fast with a piece belonging to either one of the said parts (A, B), so that by means of the said annular plate (38) the interposition means (36, 76) is adapted to provide circumferential support for the said elastic member (18B) in question.

6. Torsion damper device according to claim 5, characterised in that the interposition means (36) is engaged with a guide (41), and the support means (37) which is associated therewith intersects the path of the interposition means (36) along its guide (41).

7. Torsion damper device according to claim 6, characterised in that the interposition means (36) consists of a simple plate, and its guide (41) consists of a radially elongate recess which is formed in a flange (40) and in which the said interposition means (36) is slidingly mounted.

8. Torsion damper device according to claim 7, characterised in that the said flange (40) has at the end of the recess (41) forming the guide for the interposition means (36), a retaining nose (44) which protrudes into the said recess (41), and, beyond a shoulder (50) capable of cooperating radially in abutment against the said retaining nose (44), the said interposition means (36) comprises a radial extension (51) on which the support means (37) is capable of bearing.

9. Torsion damper device according to any one of claims 6 to 8, characterised in that the guide (41) with which the interposition means (36) is engaged belongs to either one of the said parts (A, B), and the support means (37) is carried by the associated annular plate (38).

10. Torsion damper device according to claim 5, characterised in that the return means associated with the interposition means (36) comprise a torsion spring (56), whose middle torsion part (57) surrounds a hub (10) fast with a first of the rotatable parts (A, B) in question, and of which an arm (58) is coupled to the said interposition means (36).

11. Torsion damper device according to claim 10, characterised in that, for displacement of the interposition means (36) to the deployed operating position, the arm (58) of the torsion spring (56), which is coupled to this interposition means (36), has an elbow (61) by means of which it is capable of bearing against a shoulder (63) fixed to the second of the rotatable parts (A, B) in question, and the middle torsion part (57) of the said spring (56) is angularly blocked, for example by clamping, relative to the hub (10) which it surrounds.

12. Torsion damper device according to claim 10, characterised in that, for displacement of the interposition means (36) to the deployed operating position, cam means (70, 72) are provided between the interposition means (36) and the annular plate (38).

13. Torsion damper device according to claim 12, characterised in that these cam means (70, 72) comprise a finger (70), axially carried by the annular plate (38), and a slot (72) which has an oblique side (73) and is provided in the interposition means (36), the said finger (70) being engaged in the said slot (72).

14. Torsion damper device according to claim 13, characterised in that the said slot (72) has a circumferential extension (74).

15. Torsion damper device according to any one of claims 1 to 14, characterised in that at least two interposition means (26, 36) are provided in diametrically opposite positions.

16. Torsion damper device according to claims 10 and 15, taken in combination, characterised in that the said interposition means (36) have common return means, the said return means consisting of the torsion spring (56), the two arms (58) of which each being respectively coupled to the two interposition means (36), and its middle torsion part (57) resulting from winding together into a coil of the two strands of a wire bent into a U beforehand.

17. Torsion damper device according to claim 5, characterised in that the interposition means (76) is an abutment lever which, at one of its ends, is mounted for pivoting on a first of the parts (A, B) in question, about an axis parallel to that of the latter, and which, by its other end, is capable of bearing on an abutment shoulder (80) provided for this purpose on the annular plate (38) and forming the associated support means.

18. Torsion damper device according to claim 17, characterised in that, for displacement of the abutment lever to the deployed position, cam means are provided between it and the annular plate.

19. Torsion damper device according to either one of claims 17 and 18, characterised in that the abutment lever extends substantially tangentially to a circumference of the entire device.

20. Torsion damper device according to any one of claims 1 to 19, characterised in that friction means are provided in order to delay there return of the interposition means (26, 36, 102) to the retracted position under the action of the return means which are associated with the latter.

21. Torsion damper device according to claims 1 to 20, characterised in that the number of elastic members (18A, 18B, 18B') involved in the intervention of one or more interposition means (26, 36, 102) is such as to result in a radial component along the axis of the entire device.

22. Torsion damper device according to claims 1 to 21, characterised in that all the elastic members (18B, 18B') are involved in the intervention of one or more interposition means (26, 36, 102).

23. Torsion damper device, particularly a clutch plate, of the type comprising at least two coaxial parts (A, B) mounted for rotation relative to one another, within the limits of predetermined angular movement, and against the action of elastic members (18A, 18B, 18B') adapted to act circumferentially between them for at least a range of the said angular movement, each of the said parts (A, B) comprising an annular piece (12, 11), the pieces being parallel to one another, and the said elastic members (18A, 18B, 18B') each being individually housed partly in window (20) in the annular piece (12) on one of the said parts and partly in a window (19) in the annular piece (11) of the other of the said parts, which torsion damper device is characterised in that it comprises at least one means (26, 36), hereinafter referred to as an interposition means for the sake of convenience, which is sensitive to the angular movement between the said parts (A, B), against the action of return means, and which is thus movable reversibly between a standby position, in which it is inoperative, and, beyond a predetermined value of the said movement, an operating position, in which, for at least one of the said elastic members (18A, 18B, 18B'), it either directly or indirectly takes the place of one of the radial edges of one of the windows (19, 20) in which the said elastic member (18A, 18B, 18B') is housed.

24. Torsion damping device according to claim 1 characterised in that, the elastic members (18A, 18B, 18B') having different stiffnesses, the interposition means (26, 36, 76, 102) is capable of providing circumferential support for at least one of the elastic members (18B, 18B') of high stiffness, so that the spring or springs (18A) of low stiffness are thus prevented from operating alone for low torque values.

25. Torsion damping device according to claim 1, characterised in that the elastic members (18A, 18B, 18B') having different stiffnesses, the interposition member (26, 36, 76, 102) is capable of providing a circumferential support for at least one of the elastic members (18B, 18B') of high stiffness.

26. Torsion damping device, according to claim 1, characterised in that, the elastic members (18A, 18B, 18B') having different stiffnesses, the interposition member (26, 36, 76, 102) is capable of providing a circumferential support for at least one of the elastic members (18B, 18B') of high stiffness, so that the said elastic member of high stiffness is thus prevented from becoming disabled, at least in the return mode, for low torque values.

# FIG. 1

FIG.2

FIG.3

FIG.4

FIG.5

FIG.6

FIG.7

FIG.8

FIG. 9

4

FIG.10

FIG.12

FIG.11

FIG. 14

FIG. 13

FIG.16

FIG.15

FIG.17

FIG.18